Europäisches Patentamt

European Patent Office

Office européen des brevets

(11) Publication number: **0 253 518 B1**

# EUROPEAN PATENT SPECIFICATION

(45) Date of publication of patent specification: **11.09.91**  (51) Int. Cl.⁵: **C08F 2/24**

(21) Application number: **87305411.8**

(22) Date of filing: **18.06.87**

The file contains technical information submitted after the application was filed and not included in this specification

(54) **Hydrophobically modified hydroxyethyl cellulose in aqueous dispersions.**

(30) Priority: **19.06.86 US 876954**

(43) Date of publication of application:
**20.01.88 Bulletin 88/03**

(45) Publication of the grant of the patent:
**11.09.91 Bulletin 91/37**

(84) Designated Contracting States:
**CH DE FR GB IT LI NL**

(56) References cited:
**US-A- 4 228 277**
**US-A- 4 352 916**

(73) Proprietor: **HERCULES INCORPORATED**
**Hercules Plaza**
**Wilmington Delaware 19894(US)**

(72) Inventor: **Craig, Daniel Horace**
**502 Cobblers Lane, Mendenhall Village**
**Hockessin, DE 19707(US)**

(74) Representative: **De Minvielle-Devaux, Ian**
**Benedict Peter et al**
**CARPMAELS & RANSFORD 43, Bloomsbury**
**Square**
**London WC1A 2RA(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to aqueous polymer dispersions, derived from the emulsion polymerization of monomers having a low tendency for grafting onto water-soluble protective colloids (low- or non-grafting monomers), that have improved stability characteristics.

Aqueous polymer dispersions or latices made by emulsion polymerization are useful in the manufacture of latex paints, binders for nonwoven materials, water-based inks, paper coatings and water-borne adhesives, such as pressure-sensitive adhesives.

In the emulsion polymerization of ethylenically unsaturated monomers, including vinyl monomers, with an acrylic monomer, such as acrylic esters, methacrylic esters or mixtures thereof, it is known that the presence of protective colloids, such as hydroxy ethylcellulose (HEC) and polyvinyl alcohol, provides polymer latices with the most desirable submicron particle size and improved stability and performance. Although several theories have been postulated for this effect, they have been speculative at best. Some reported studies have indicated that the grafting reactions of the acrylic units of the vinyl monomer-acrylic copolymer with the HEC are reponsible for that improved stability.

It is also known (from U.S. Patent 4,352,916 of Landoll) that when it is important to avoid rather than promote the production of emulsion polymerization products, suspension polymerizations of vinyl monomers can be improved by carrying out the suspension polymerization in the presence of nonionic cellulose ethers that are hydrophobically modified by the addition thereto of a long chain alkyl substituent of 6 to about 25 carbon atoms.

However, the studies of emulsion polymerization of vinyl acetate, a monomer having a low tendency for grafting onto water-soluble protective colloids like HEC, show that mechanically stable latices are not produced. (See Craig, D. H., Polymeric Materials Science and Engineering, 51, 172 (1984); 52, 104 (1985); 53, 529 (1985); 54, 354 & 370 (1986)).

In view of these studies, one would expect that ethylenically unsaturated monomers that lack reactivity toward carbon radicals and have a low tendency for grafting onto water-soluble protective colloids such as HEC during emulsion polymerization, such as vinyl esters, mixtures of a vinyl ester such as vinyl versatate monomer and vinyl acetate, vinyl ethers, vinyl chloride, N-vinyl pyrrolidone, ethylene and $C_3$ or greater alpha-olefins, would also give unstable latices when emulsion polymerized in the presence of protective colloids such as HEC.

In some instances, the lack of mechanical stability may be overcome by using high levels (generally about 2% or more by weight of the total monomer content) of HEC in the emulsion polymerization, or of course by copolymerization with acrylic monomers. However, latices prepared with such high levels of HEC do not have good water resistance and adhesion, and latices prepared with acrylic comonomers are difficult to prepare uniformly due to the well-known differences in reactivity of acrylic monomes versus vinyl esters, vinyl ethers, vinyl halides and the like.

Thus, there exists a need for a protective colloid that can be readily incorporated at low concentrations in the emulsion polymerization of such low- or non-grafting monomers to provide latices having improved mechanical stability, that is, the ability to avoid coagulation for a reasonable period. There is particular need for latices having small particle sizes (preferably less than 1 $\mu$m), because latices having a particle size greater than 1 $\mu$m have a somewhat greater tendency to coagulate. However, they may be acceptable for many uses that do not require long storage, for instance, not over a week.

According to the invention, a process for making an aqueous polymer dispersion by emulsion polymerization of an ethylenically unsaturated monomer having a low tendency for grafting onto hydroxyethyl cellulose, in which the polymerization is carried out in the presence of a emulsion polymerization surfactant and a polymerization initiator or catalyst, is characterized in that the polymerization is carried out also in the presence of from about 0.01% to about 1.7%, by weight of the total monomer content, of a nonionic methyl, hydroxyethyl or hydroxypropyl cellulose ether having a sufficient degree of nonionic substitution to cause it to be water-soluble in the absence of further modification, and that is hydrophobically modified by further substitution with at least about 0.1% weight percent of a hydrocarbon radical having about 8 to 25 carbon atoms.

The resultant latices have excellent mechanical stability, as indicated by the absence of a coagulation in about 10 minutes in test procedures that can be regarded as indicating minimal satisfactory stability for storage. Latex paints formulated with these latices exhibit good water and abrasion resistance.

Preferably, in order to produce smaller particle sizes, not more than 2% of the hydrophobically modified cellulose (that is, the same concentrations typically required for HEC to impart good mechanical stability to latices) is used. As already pointed out, latices having particle sizes greater than 1 $\mu$m tend to have shorter storage capability.

The hydrophobically modified cellulose is preferably present in an amount from about 0.1% to about 0.5%, by weight based on the total monomer content.

U.S. Patent 4,228,277 of Landoll refers generally to the protective colloid used in this invention as water-soluble nonionic cellulose ethers that are substituted with a hydrocarbon radical having about 10 to 24 carbon atoms in an amount between about 0.2 weight percent and the amount that renders them less than 1% by weight soluble in water. The cellulose ether that is modified is disclosed as one of low to medium molecular weight, i.e., less than about 800,000 and preferably between about 20,000 and 500,000.

Any nonionic water-soluble cellulose ether can be employed as the cellulose ether substrate to form the products of this invention. Thus, for instance, hydroxyethyl cellulose, hydroxypropyl cellulose, methyl cellulose, hydroxypropyl methyl cellulose, ethyl hydroxyethyl cellulose, and methyl hydroxyethyl cellulose can all be modified. The amount of nonionic substituent such as methyl hydroxyethyl or hydroxypropyl is not critical so long as there is sufficient to assure that the ether is water soluble.

More specifically, the modified methyl cellulose may have a D.S. (i.e., average number of hydroxy groups per cellulosic anhydroglucose unit of the cellulose molecule that is substituted) of at least about 1.4 (preferably about 1.7 to 2.5). The modified hydroxyethyl cellulose may have a hydroxyethyl M.S. (i.e., average number of moles of the hydroxyethyl substituent groups per cellulosic anhydroglucose unit) of at least about 1.5 (preferably about 1.5 to 4.0) and the modified hydroxypropyl cellulose may have a hydroxypropyl M.S. of about 2 to 5.

The long chain alkyl modifier can be attached to the cellulose ether substrate via an ether, ester or urethane linkage. The ether linkage is preferred, because the reagents most commonly used to effect etherification are readily obtained, the reaction is similar to that commonly used for the initial etherification, and the reagents are usually more easily handled than the reagents employed for modification by the other linkages. The resulting linkage is also usually more resistant to further reactions.

Methods of preparing mixed ethers of cellulose, i.e., products having more than on etherifying modifier attached to the same cellulose molecule, are known in the art. The products of this invention can be prepared via essentially the same methods. Briefly, the preferred procedure for preparing the mixed ethers of this invention comprises slurrying the nonionic cellulose ether in an inert organic diluent such as a lower aliphatic alcohol, ketone, or hydrocarbon and adding a solution of alkali metal hydroxide to the resultant slurry at a low temperature. When the ether is thoroughly wetted and swollen by the alkali, a $C_8$ to $C_{24}$ epoxide is added and the reaction is continued, with agitation, until complete. Residual alkali is then neutralized and the product is recovered, washed with inert diluents, and dried. The etherification can also be effected with a $C_8$ to $C_{24}$ halide or halohydride but these are sometimes less reactive, less efficient and more corrosive so it is preferred to use the epoxide.

Substantially the same procedure is used to attach the hydrocarbon modifier via the ester or urethane linkage. Conventional slurry methods of reacting this type of modifier with cellulose ethers, i.e., without the alkali, are ineffective. The alkali steep is required in order to assure that the cellulose ether is swollen to the point that the modifier can react substantially uniformly on all cellulose ether molecules throughout.

Although the products of this invention are generally referred to as being "long chain alkyl group modified", it will be recognized that except in the case where modification is effected with an alkyl halide, the modifier is not a simple long chain alkyl group. The group is actually an alphahydroxyalkyl radical in the case of an epoxide, a urethane radical in the case of an isocyanate, or an acyl radical in the case of an acid or acyl chloride. Nonetheless, the terminology "long chain alkyl group" is used since the size and effect of the hydrocarbon portion of the modifying molecule completely obscure any noticeable effect from the connecting group. Properties are not significantly different from those of the product modified with the simple long chain alkyl group.

The preferred cellulose ether substrate for use in the method according to this invention is hydroxyethyl cellulose (HEC) of about 50,000 to 400,000 molecular weight, preferably 280,000 to about 400,000, and has a hydroxyethyl M.S. of from about 2.5 to about 3.5, preferably at least 2.9. (The molecular weight is determined by extrapolation from the degree of polymerization. It can be varied by degradation or depolymerization by any conventional means of degradation, such as treatment with peroxide, to obtain the desired molecular weight, either before or after substitutions with the hydroxyethyl and hydrophobic groups).

HEC of this molecular weight level is the most hydrophilic of the usable nonionic cellulose ethers, since their hydrophilicity varies in the general direction: hydroxyethyl, hydroxypropyl, hydroxypropylmethyl, methyl. This HEC can thus be modified to a greater extent than can other cellulose ether substrates before insolubility is achieved. Accordingly, control of the modification process and control of the properties of the modified product can be more precise with this substrate.

The hydrophobically modified HEC (HMHEC) useful in the practice of this invention is an HEC that is

EP 0 253 518 B1

further substituted with a hydrocarbon radical having from 8 to 25 carbon atoms, preferably from 8 to 20 carbon atoms, in an amount from about 0.05% to about 1%, preferably from about 0.1% to about 0.9% by weight of the HMHEC.

Preferably, the hydrocarbon radical of the hydrophobically modified HEC is present in an amount from about 0.05% to about 1%, more preferably in an amount from about 0.4% to about 0.9%, by weight of the HMHEC.

The HEC substrate is available commercially or can be prepared by any known method, such as by treating a cellulose furnish with ethylene oxide in an alkaline medium. Any cellulose furnish can be used, such as wood pulp or chemical cotton.

Typically the cellulosic furnish has a degree of polymerization (D.P.) from about 1300 to about 2300. (D.P. is the number of anhydroglucose units in the cellulose backbone as determined by a five point intrinsic viscosity determination).

The term "hydrocarbon radical" as used herein is meant to include the hydrocarbon portion as well as any other moiety present, such as an ester, ether, or urethane moiety, as a result of the particular compound used to further substitute the HEC.

In general, any monomer which would be expected to exhibit little potential for aqueous phase grafting to protective colloids can be used in the practice of this invention.

Suitable monomers having such low protective-colloid-grafting potential include vinyl esters, a mixture of a vinyl versatate monomer and vinyl acetate vinyl ethers, vinyl and vinylidene halides, N-vinyl pyrrolidone, ethylene, $C_3$ or greater alpha-olefins, allyl amines, allyl esters of saturated monocarboxylic acids and amides thereof.

Suitable vinyl esters include aliphatic vinyl esters, such as vinyl formate, vinyl acetate, vinyl propionate, vinyl butyrate, vinyl isobutyrate, vinyl valerate, vinyl caproate and vinyl versatate.

Suitable vinyl ethers include methylvinyl ether, ethylvinyl ether and n-butylvinyl ether.

Suitable $C_3$ or greater alpha-olefins include propylene, 1-butene, 1-pentene, 1-hexene, and 1-decene.

Allyl amine and substituted allyl amines are typical suitable allyl amines.

Suitable allyl esters of saturated monocarboxylic acids include allyl acetate, allyl propionate and allyl lactate, and their amides.

In the emulsion polymerization of the ethylenically unsaturated monomers, the HMHEC cannot be used as the sole emulsifier. It is supplemented by any traditional surfactant system that is conventionally used in emulsion polymerization. Anionic, cationic, nonionic and amphoteric emulsifiers and mixtures thereof known in the art may be used in the practice of this invention. For instance, suitable emulsifiers include polyglycol ethers, sulfonated paraffin hydrocarbons, higher alkyl sulfates such as lauryl sulfate, alkali metal salts of fatty acids such as sodium stearate and sodium oleate, sulfuric acid esters of fatty alcohols, ethoxylated $C_{4-12}$ alkyl phenols and their sulfonation products and also sulfosuccinic acid esters in amounts usually of from 0.1 to 5.0% by weight based on the monomers.

Preferred emulsifier systems includes polyoxyethylene (23) lauryl ether and sodium lauryl sulfate, or an octylphenol ethoxylate, or a disodium salt of the ethoxylated fatty alcohol half ester of sulfosccinic acid.

Conventional methods of emulsion polymerization are used, including batch, semi-batch, or continuous procedures, or techniques using redox polymerization catalysts. Semi-batch monomer addition with either batch or continuous addition of the initiator or catalyst is preferred. Preferably from about 1% to about 25% of the monomer or monomers is added in the initial charge to the reactor, most preferably about 5% to about 15%. The continuous addition of any reaction ingredient or ingredients is generally done over a period of from about 2 to about 5 hours.

In general, the monomer or monomers are polymerized in aqueous emulsion at from about 20°C to about 120°C, preferably from about 50°C to about 75°C, in the presence of a free radical polymerization initiator, particularly a water-soluble peroxide, such as hydrogen peroxide, persulfates such as potassium, sodium and ammonium persulfates, or perborates.

The exact mechanism by which the hydrophobically modified nonionic cellulose ethers provide stable latices is not known. However, it can be theorized that the grafting reactions of monomers onto the protective colloid is enhanced by the presence of the hydrophobes as compared to the effect of unmodified HEC. The resultant dispersions also impart significant improvement to the wet-abrasion resistance of latex paints formulated with them.

All parts and percentages used in this specification are by weight unless otherwise indicated.

The following examples are illustrative of this invention.

Example 1

4

This example illustrates one embodiment of the aqueous dispersions of this invention, using vinyl acetate as the monomer.

A reaction vessel equipped with a stirrer, reflux condenser, thermometer, one feed port and a water jacket is charged with 44.8 parts distilled water, 1.5 parts of a 5% aqueous solution of sodium bicarbonate, 0.7 parts of polyoxyethylene (23) lauryl ether (a surfactant available from ICI Americas as "Brij 35"), 0.7 parts sodium lauryl sulfate, and 0.2 parts of a hydrophobically modified HEC having a Brookfield LVT viscosity of 400 Pa.s (400 cps) in a 1% aqueous solution at 25°C and a hydroxyethyl M.S. of 3.5; (this HMHEC is available from Aqualon Company as "Natrosol Plus type 330", and is an ether produced by modification with an alkyl halide containing 0.5% of a $C_{16}$ hydrophobe by weight based on the HMHEC). Stirring is continuous throughout the reaction. The temperature of the reactor is raised to 75°C and maintained via circulating hot water. Ten (10) parts of vinyl acetate is added. Two and five tenths (2.5) parts of a 5% aqueous solution of potassium persulfate is then added batchwise. The addition of 38 parts of the vinyl acetate is started and continued uniformly over a 2.5 hour period. The reaction temperature is maintained at 75°C for 1 hour after the final addition of the monomer. The reaction mixture is then cooled by circulating cold water.

Example 2

This example illustrates another embodiment of this invention.

The procedure and formulation of Example 1 are used except that the the 0.7 parts of Brij 35, and the 0.7 parts of sodium lauryl sulfate were replaced by 0.7 parts of octylphenol ethoxylate having 10 moles of ethylene oxide and 2.3 parts of the disodium salt of the ethoxylated fatty alcohol half ester of sulfosuccinic acid, and that a monomer mixture consisting essentially of 30% vinyl acetate and 23% VV-10 vinyl versatate monomer (a vinyl ester of a branched chain aliphatic acid marketed under VV-10 by Shell Chemical Company) is used instead of the vinyl acetate of Example 1.

Example 3

This example illustrates another embodiment of this invention.

The procedure of Example 1 and formulation of Example 2 are used except that the C-16 hydrophobically modified Natrosol Plus Type 330 was replaced by a specially prepared HMHEC having 1.2% of a $C_{12}$ hydrophobe by weight, ether linked from lauryl bromide.

Example 4

This example illustrates another embodiment of this invention.

The procedure of Example 1 and formulation of Example 2 are used except that the Natrosol Plus Type 330 HMHEC is added as a 5% aqueous solution that has been heated for 1 hour on a steam bath in the presence of 1% of hydrogen peroxide (by weight of the HMHEC). The degradation with the hydrogen peroxide provides a HMHEC having a Brookfield viscosity of 36 cps in a 1% aqueous solution at 25°C.

Example 5

This example illustrates another embodiment of this invention.

A reaction vessel equipped with a stirrer, reflux condenser, thermometer, one feed port and a water jacket is charged with 43.3 parts distilled water, 1.5 parts of a 5% aqueous solution of sodium bicarbonate, 3.4 parts octylphenol ethoxylate having 40 moles of ethylene oxide, 1 drop of a 2% aqueous solution of ferrous sulfate, 3.0 parts of a 5% aqueous solution of potassium persulfate, 4.0 parts of a 5% aqueous solution of HMHEC having a Brookfield viscosity of 400mPa.s (400 cps) in a 1% aqueous solution at 25°C, 0.5% of a $C_{16}$ hydrophobe by weight of the HMHEC, and a hydroxyethyl M.S. of 3.5, and 44 parts of a monomer mixture containing, by weight, 80 parts vinyl acetate and 20 parts VV-10 vinyl versatate monomer and stirred at room temperature (23°C). After stirring for 15 minutes, 0.8 parts of a 4% aqueous solution of sodium formaldehyde sulfoxylate is added and the resulting temperature rise monitored. Stirring is continuous throughout the reaction. After the temperature of the reactor has peaked at 75°C and then fallen to 50°C, the solids content is determined gravimetrically and the reaction is then cooled by circulating cold water.

Example 6

This example illustrates another embodiment of this invention with a monomer mixture including vinyl chloride.

To a jacketed pressure vessel is added 44.8 parts distilled water, 1.5 parts of a 5% aqueous solution of sodium bicarbonate, 0.7 parts octylphenol ethoxylate having 10 moles of ethylene oxide, 2.3 parts disodium salt of the ethyoxylated fatty alcohol half ester of sulfosuccinic acid and (Aerosol A-102, American Cyanamid) and 0.2 parts of the HMHEC of Example 1 (Natrosol Plus Type 330) and the mixture agitated at 200 rpm until homogenous (approximately 60 minutes). At this time, .25 parts of a 5% aqueous solution of potassium persulfate, and 48.0 parts of a mixture of 50 parts vinyl acetate, 30 parts vinyl chloride, and 20 parts of the vinyl VV-10 vinyl monomer of Example 2 are charged to the reactor. Mixing is continued for 10 minutes, then 1.0 parts of a 4% aqueous solution of sodium formaldehyde sulfoxylate is added to initiate polymerization. The reaction is moved to exotherm to about 75°C and maintained at that temperature via circulating cooling water. After 2 hours, hot water is circulated through the reactor to maintain the 75°C temperature for an additional 2 hours at which time the reaction is cooled to room temperature, and filtered.

## Comparative Example 7

This example illustrates the need for hydrophobically modified hydroxyethyl cellulose (HMHEC) to be present during the emulsion polymerization of the low-protective-colloid-grafting-potential monomers in order to provide stable latices.

The procedure of Example 1 and formulation of Example 2 are used except that the nonionic ethoxylated fatty alcohol half ester of sulfosuccinic acid is the only surfactant, and the HMHEC is omitted and then added as a 5% aqueous solution (4 g solution to 96 g latex) after the latex is prepared and cooled to room temperature.

## Comparative Example 8

This example illustrates that HMHEC cannot be used as the sole emulsifier.

The procedure or Example 1 and formulation of Example 2 are used except that the 0.7 parts octylphenol ethoxylate having 10 moles of ethylene oxide and the 2.3 parts disodium salt of the ethoxylated fatty alcohol half ester of sulfosuccinic acid of Example 2 are omitted and except that 1.2 parts of the HMHEC is used instead of 0.2 parts.

## Comparative Example 9

This example illustrates the lack of effectiveness of HEC at low concentrations in the polymerization of low protective colloid-grafting potential vinyl acetate monomer.

The formulation and procedure of Example 1 are used except that a HEC having a Brookfield viscosity of 400 Pa.s (400 cps) in a 2% aqueous solution at 25°C and a H.E. M.S. of 2.5 is used (available from Aqualon Company as Natrosol 250 GR HEC, instead of the HMHEC sold under the trade name Natrosol Plus type 330.

## Comparative Example 10

This example illustrates the emulsion polymerization of a vinyl acetate-based monomer mix containing a monomer having a high-protective-colloid-grafting potential in the presence of a HMHEC.

The procedure and formulation of Example 1 are used except that a monomer mixture consisting of 85 parts vinyl acetate and 15.0 parts butyl acrylate is used instead of the vinyl acetate. The resultant latex has a particle size greater than 1.0 μm.

## Comparative Example 11

This example illustrates the emulsion polymerization of monomers having high-protective-colloid-grafting potential in the presence of a hydrophobically modified hydroxyethyl cellulose.

The procedure and formulation of Example 1 are used except that a monomer mixture consisting of 42.7 parts butyl acrylate, 56.8 parts methyl methacrylate and 0.5 parts methacrylic acid is used instead of the vinyl acetate.

The properties of the the latices of the foregoing Examples and Comparative Examples are set forth in Table I.

### Example 13

The example illustrates the use of the latices of this invention in flat latex paint formulations and how to prepare them.

## Table I

| Example | pH | Solids, Wt. % | Viscosity, (cps)[1] Pa.s | Particle Size, microns [2] | Shear Stability [3] |
|---|---|---|---|---|---|
| 1 | 4.6 | 50 | 6400 | 0.20 | Yes |
| 2 | 4.8 | 50 | 2800 | 0.45 | Yes |
| 3 | 4.7 | 50 | 3020 | 0.51 | Yes |
| 4 | 4.8 | 50 | 2900 | 0.33 | Yes |
| 6 | 4.8 | 50 | 200 | 0.45 | Yes |
| 7 | 4.9 [4] | 50 [4] | 150 [4] | 0.13 [5] | No (coagulated in 1 minute) [5] |
| 8 | -- | Coagulated | -- | -- | -- |
| 9 | 4.8 | 50 | 1800 | 0.23 | No (coagulated in 15 seconds) |
| 10 | 4.8 | 48 | 46 | 2.9+ | Yes |
| 11 | -- | Coagulated | -- | -- | -- |

(1)  Brookfield Model LVT viscosity at 25°C. before shearing the sample in a Waring blender for 10 minutes at the highest speed.

(2)  Coulter Nanosizer particle size reading before shearing the sample in a Waring blender for 10 minutes at the highest speed.

(3)  Ten minutes in a Waring blender at highest speed.

(4)  Before the addition of the HMHEC.

(5)  Taken after the addition of the hydrophobically modified HEC, latex coagulated in 5 seconds in total absence of HMHEC.

The latex paint is prepared by charging a Cowles disperser with the first 13 ingredients set forth below in Table II and mixing and grinding at high speed for 20 minutes. The remaining 3 ingredients of Table II are then added to the disperser and the mixture is ground at medium speed for 20 minutes.

Table II

| Ingredients | Parts by Weight |
|---|---|
| Distilled water | 444.5 |
| Potassium tripolyphospnate | 2.0 |
| Lecithin | 2.0 |
| Aqueous diisobutylene-maleic acid copolymer, Na salt (25% solids) | 5.0 |
| Defoamer 501 nydropnobic surface-modified silica* | 2.0 |
| Ethylene glycol | 20.0 |
| Diethylene glycol monobutyl ether acetate | 10.0 |
| Titanium dioxide, paint grade | 175.0 |
| Calcium carbonate | 150.0 |
| Iceberg clay | 125.0 |
| Silica, 3 μm average particle size; 99.5% $SiO_2$ | 25.0 |
| Nonylphenoxy polyethyleneoxyethanol (10) | 3.0 |
| Natrosol 250 GR HEC | 5.5 |
| Bromobenzylacetate | 0.5 |
| Latex of Example 2** | 200.0 |
| Distilled water | 56.0 |

\* Available from Hercules Incorporated.

\** Based on 48% solids latex. Tne amount of wet latex and water added during the let-down stage will vary according to the weignt percent latex solids. All latexes areformulated to 96 g dry latex solids.

Comparative Example 14

The procedure and formulation of Example 13 are used except that the latex of Comparative Example 10 is used instead of the latex of Example 2.

The properties of the latex formulations of Example 13 and Comparative Example 14 are set forth in Table III below:

Table III

| Example | Abrasion Resistance[1], Cycles to Failure |
|---|---|
| 13 | 718 |
| 14 | 496 |

[1] Represents "scrub cycles to failure" of 78 polyvinylchloride flat paint films formulated with the respective latex after 4 days aging, according to ASTM D-2486-74a.

**Claims**

1. A process for making an aqueous polymer dispersion by emulsion polymerization of an ethylenically unsaturated monomer having a low tendency for grafting onto hydroxyethyl cellulose, in which the polymerization is carried out in the presence of an emulsion polymerization surfactant and a polymerization initiator or catalyst, characterized in that the polymerization is carried out also in the presence of from about 0.01% to about 1.7% by weight of the total monomer content, of a nonionic methyl, hydroxyethyl or hydroxypropyl cellulose ether having a sufficient degree of nonionic substitution to cause it to be water-soluble in the absence of further modification and that is hydrophobically modified by further substitution with at least about 0.1 weight percent of a hydrocarbon radical having about 8 to 25 carbon atoms.

2. A process as claimed in claim 1, further characterized in that the polymerization is carried out in the presence of a hydrophobically modified hydroxyethyl cellulose ether having a hydroxyethyl M.S. (average number of moles of the hydroxyethyl substituent groups per cellulosic anhydroglucose unit) of from about 2.5 to about 3.5.

3. A process as claimed in claim 1 or 2, further characterized in that the hydroxyethyl cellulose ether has a hydroxyethyl M.S. (average number of moles of the hydroxyethyl substituent groups per cellulosic anhydroglucose unit) of at least 2.9.

4. A process as claimed in claim 1, 2 or 3, further characterized in that the hydrocarbon radical of the hydrophobically modified hydroxyethyl cellulose is present in an amount from about 0.05% to about 1%, by weight of the hydrophobically modified hydroxyethyl cellulose.

5. A process as claimed in claim 4, further characterized in that the hydrocarbon radical of the hydrophobically modified hydroxyethyl cellulose is present in an amount from about 0.1% to about 0.9%.

6. A process as claimed in claim 5, further characterized in that the hydrocarbon radical of the hydrophobically modified hydroxyethyl cellulose is present in an amount from about 0.4% to about 0.9%.

7. A process as claimed in any of the preceding claims, further characterized in that the hydroxyethyl cellulose ether is hydrophobically modified with not more than about 2.0 weight percent of the hydrocarbon radical so that the process produces a polymer latex having a particle size of less than 1.0 $\mu$m.

8. A process as claimed in any of the preceding claims, further characterized in that the ethylenically unsaturated monomer is a vinyl ester, a mixture of a vinyl versatate monomer and vinyl acetate, a vinyl ether, a vinyl or vinylidene halide, a N-vinyl pyrrolidone, ethylene, a $C_3$ or greater alpha-olefin, an allyl amine, or an allyl ester of a saturated monocarboxylic acid or its amide.

9. A process as claimed in any of the preceding claims, further characterized in that the cellulose ether is a hydroxyethyl cellulose ether hydrophobically modified with an alkyl halide containing 0.5% of a $C_{16}$ hydrophobe by weight, in an emulsion polymerization with vinyl acetate monomer and a surfactant mixture of polyoxyethylene (23 lauryl ether) and sodium lauryl sulfate.

10. A process as claimed in any of the preceding claims, further characterized in that the cellulose ether is a hydroxyethyl cellulose ether hydrophobically modified with an alkyl halide containing 0.5% of a $C_{16}$ hydrophobe by weight, in an emulsion polymerization with a monomer mixture consisting of vinyl acetate and vinyl versatate monomers and a surfactant mixture consisting of octylphenol ethoxylate having 10 moles of ethylene oxide and the disodium salt of the ethoxylated fatty alcohol half ester of sulfosuccinic acid.

11. A process as claimed in any of the preceding claims, further characterized in that the cellulose ether is a hydroxyethyl cellulose ether hydrophobically modified by an ether linkage with a lauryl bromide $C_{12}$ hydrophobe, in an emulsion polymerization with a monomer mixture consisting of vinyl acetate and

EP 0 253 518 B1

vinyl versatate monomers and a surfactant mixture consisting of octylphenol ethoxylate having 10 moles of ethylene oxide and the disodium salt of the ethoxylated fatty alcohol half ester of sulfosuccinic acid.

12. A process as claimed in any of the preceding claims, further characterised in that from 1% to 25% of the monomer or monomers is added initially with additional additions and reaction continuing for 2 to 5 hours at a temperature of 50° C to 75° C in the presence of a free radical polymerisation initiator.

**Revendications**

1.  Procédé de préparation d'une dispersion aqueuse de polymère par polymérisation en émulsion d'un monomère à insaturation éthylénique ayant une faible tendance au greffage sur l'hydroxyéthylcellulose, dans lequel la polymérisation est effectuée en présence d'un surfactant de polymérisation en émulsion et d'un initiateur ou catalyseur de polymérisation, caractérisé en ce que la polymérisation est effectuée également en présence de 0,1% à 1,7% environ en poids, par rapport à la teneur totale en monomères, d'un éther non ionique de méthyl-, d'hydroxyéthyl- ou d'hydroxypropyl-cellulose qui a un degré suffisant de substitution non ionique pour le rendre hydrosoluble en l'absence d'autre substitution, et qui est modifié dans le sens de l'hydrophobie par substitution supplémentaire par au moins 0,1% en poids environ d'un radical hydrocarboné renfermant 8 à 25 atomes de carbone environ.

2.  Procédé selon la revendication 1, caractérisé en outre en ce que la polymérisation est conduite en présence d'un éther d'hydroxyéthylcellulose modifié dans le sens de l'hydrophobie, ayant une S.M. d'hydroxyéthyle (nombre moyen de moles des groupements hydroxyéthyle substituants par motif anhydroglucose cellulosique) d'environ 2,5 à environ 3,5.

3.  Procédé selon la revendication 1 ou 2, caractérisé en outre en ce que l'éther d'hydroxyéthylcellulose a une S.M. d'hydroxyéthyle (nombre moyen de moles des groupements hydroxyéthyle substituants par motif anhydroglucose cellulosique) d'au moins 2,9.

4.  Procédé selon l'une quelconque des revendications 1 à 3, caractérisée en outre en ce que le radical hydrocarboné de l'hydroxyéthylcellulose modifiée dans le sens de l'hydrophobie est présent dans une proportion d'environ 0,05% à environ 1% en poids par rapport à l'hydroxyéthylcellulose modifiée dans le sens de l'hydrophobie.

5.  Procédé selon la revendication 4, caractérisé en outre en ce que le radical hydrocarboné de l'hydroxyéthylcellulose modifiée dans le sens de l'hydrophobie est présent dans une proportion d'environ 0,1% à environ 0,9%.

6.  Procédé selon la revendication 5, caractérisé en outre en ce que le radical hydrocarboné de l'hydroxyéthylcellulose modifiée dans le sens de l'hydrophobie est présent dans une proportion d'environ 0,4% à environ 0,9%.

7.  Procédé selon l'une quelconque des revendications 1 à 6, caractérisé en outre en ce que l'éther d'hydroxyéthylcellulose est modifié dans le sens de l'hydrophobie par une proportion du radical hydrocarboné qui ne dépasse pas 2,0% en poids environ, de sorte que le procédé donne un latex de polymère ayant une grosseur de particules de moins de 1,0 $\mu$m.

8.  Procédé selon l'une quelconque des revendications 1 à 7, caractérisé en outre en ce que le monomère à insaturation éthylénique est un ester vinylique, un mélange d'un monomère versatate de vinyle et d'acétate de vinyle, un éther vinylique, un halogénure de vinyle ou de vinylidène, une N-vinylpyrrolidone, l'éthylène, une $\alpha$-oléfine en $C_3$ ou plus, une amine d'allyle ou un ester allylique d'un acide monocarboxylique saturé ou son amide.

9.  Procédé selon l'une quelconque des revendications 1 à 8, caractérisé en outre en ce que l'éther cellulosique est un éther d'hydroxyéthylcellulose modifié dans le sens de l'hydrophobie par un halogénure d'alkyle contenant 0,5% en poids d'un hydrophobe en $C_{16}$, en polymérisation en émulsion avec un monomère acétate de vinyle et un mélange surfactant de polyoxyéthylène (éther laurylique 23) et de laurylsulfate de sodium.

10. Procédé selon l'une quelconque des revendications 1 à 9, caractérisé en outre en ce que l'éther cellulosique est un éther d'hydroxyéthylcellulose modifié dans le sens de l'hydrophobie par un halogénure d'alkyle contenant 0,5% en poids d'un hydrophobe en C₁₆, en polymérisation en émulsion avec un mélange de monomères composé d'acétate de vinyle et de monomères versatate de vinyle et avec un mélange de surfactants composé d'éthoxylate d'octylphénol renfermant 10 moles d'oxyde d'éthylène et du sel disodique du semi-ester éthoxylé d'alcool gras et d'acide sulfosuccinique.

11. Procédé selon l'une quelconque des revendications 1 à 10, caractérisé en outre en ce que l'éther cellulosique est un éther d'hydroxyéthylcellulose modifié dans le sens de l'hydrophobie par une liaison éther avec un hydrophobe en C₁₂ de bromure de lauryle, en polymérisation en émulsion avec un mélange de monomères composé d'acétate de vinyle et de monomères versatate de vinyle et avec un mélange de surfactants composé d'éthoxylate d'octylphénol renfermant 10 moles d'oxyde d'éthylène et du sel disodique du semi-ester éthoxylé d'alcool gras et d'acide sulfosuccinique.

12. Procédé selon l'une quelconque des revendications 1 à 11, caractérisé en outre en ce que de 1% à 25% du monomère ou des monomères sont introduits initialement avec les additions supplémentaires, et la réaction est poursuivie pendant 2 à 5 h à une température de 50°C à 75°C en présence d'un initiateur radicalaire de polymérisation.

**Patentansprüche**

1. Verfahren zur Herstellung einer wässrigen Polymerdispersion durch Emulsionspolymerisation eines ethylenisch ungesättigten Monomers mit geringer Tendenz zum Pfropfen auf Hydroxyethylzellulose, worin die Polymerisation ausgeführt wird in Anwesenheit eines Emulsionspolymerisation-oberflächenaktiven Materials und eines Polymerisationsinitiators oder Katalysators, dadurch gekennzeichnet, daß die Polymerisation durchgeführt wird auch in Anwesenheit von etwa 0,01 bis etwa 1,7 Gew.-% des Gesamtmonomergehalts eines nichtionischen Methyl-, Hydroxyethyl- oder Hydroxypropyl-Zelluloseethers mit einem genügenden Grad an nichtionischer Substitution, um ihn wasserlöslich zu machen in Abwesenheit weiterer Modifikation und, der durch weitere Substitution mit wenigstens etwa 0,1 Gew.-% eines Kohlenwasserstoffrests mit etwa 8 bis 25 Kohlenstoffatomen hydrophob modifiziert wird.

2. Verfahren nach Anspruch 1, weiter dadurch gekennzeichnet, daß die Polymerisation in Anwesenheit eines hydrophob modifizierten Hydroxyethyl-Zelluloseethers mit einer Hydroxyethyl M.S. (durchschnittliche Molanzahl der Hydroxyethyl-Substituentengruppen pro Zellulose-Anhydroglukose-Einheit) von etwa 2,5 bis etwa 3,5 durchgeführt wird.

3. Verfahren nach Anspruch 1 oder 2, weiter dadurch gekennzeichnet, daß der Hydroxyethyl-Zelluloseether eine Hydroxyethyl M.S. (durchschnittliche Molanzahl der Hydroxyethyl-Substituentengruppen pro Zellulose-Anhydroglukose-Einheit) von wenigstens 2,9 aufweist.

4. Verfahren nach Anspruch 1, 2 oder 3, weiter dadurch gekennzeichnet, daß der Kohlenwasserstoffrest der hydrophob modifizierten Hydroxyethylzellulose in einer Menge von etwa 0,05% bis etwa 1% an Gewicht der hydrophob modifizierten Hydroxyethylzellulose anwesend ist.

5. Verfahren nach Anspruch 4, weiter dadurch gekennzeichnet, daß der Kohlenwasserstoffrest der hydrophob modifizierten Hydroxyethylzellulose in einer Menge von etwa 0,1 bis etwa 0,9 % anwesend ist.

6. Verfahren nach Anspruch 5, weiter dadurch gekennzeichnet, daß der Kohlenwasserstoffrest der hydrophob modifizierten Hydroxyethylzellulose in einer Menge von etwa 0,4 bis etwa 0,9 % anwesend ist.

7. Verfahren nach einem der vorhergehenden Ansprüche, weiter dadurch gekennzeichnet, daß der Hydroxyethylzelluloseether mit nicht mehr als etwa 2,0 Gew.-% des Kohlenwasserstoffrestes modifiziert wird, so daß das Verfahren einen Polymerlatex mit einer Teilchengröße von weniger als 1,0 μm erzeugt.

8. Verfahren nach einem der vorhergehenden Ansprüche weiter dadurch gekennzeichnet, daß das ethylenisch ungesättigte Monomer ein Vinylester, eine Mischung eines Vinylversatatmonomers und Vinylacetat, ein Vinylether, ein Vinyl- oder Vinylidenhalogenid, ein NVinylpyrrolidon, Ethylen, ein C₃ oder größeres Alpha-Olefin, ein Allylamin oder ein Allylester einer gesättigten Monocarbonsäure oder ihres Amids ist.

9. Verfahren nach einem der vorhergehenden Ansprüche, weiter dadurch gekennzeichnet, daß der Zelluloseether ein Hydroxyethylzelluloseether ist, der mit einem Alkylhalogenid, das 0,5 Gew.-% eines $C_{16}$-Hydrophobs enthält, hydrophob modifiziert ist, in einer Emulsionspolymerisation mit Vinylacetatmonomer und einer oberflächenaktiven Mischung von Polyoxyethylen (23 Laurylether) und Natriumlaurylsulfat.

10. Verfahren nach einem der vorhergehenden Ansprüche, weiter dadurch gekennzeichnet, daß der Zelluloseether ein Hydroxyethylzelluloseether ist, der mit einem Alkylhalogenid, das 0,5 Gew.-% eines $C_{16}$-Hydrophobs enthält, modifiziert ist, in einer Emulsionspolymerisation mit einer Monomermischung, die aus Vinylacetat und Vinylversatatmonomeren und einer oberflächenaktiven Mischung, bestehend aus Octylphenolethoxylat mit 10 Mol Ethylenoxid und dem Dinatriumsalz des ethoxylierten Fettalkohol-Halbesters von Sulfobernsteinsäure besteht.

11. Verfahren nach einem der vorhergehenden Ansprüche, weiter dadurch gekennzeichnet, daß der Zelluloseether ein Hydroxyethylzelluloseether ist, der durch eine Etherbindung mit einem Laurylbromid-$C_{12}$-Hydrophob modifiziert ist, in einer Emulsionpolymerisation mit einer Monomermischung, die aus Vinylacetat und Vinylversatatmonomeren und einer oberflächenaktiven Mischung, bestehend aus Octylphenolethoxylat mit 10 Mol Ethylenoxid und dem Dinatriumsalz des ethoxylierten Fettalkohol-Halbesters von Sulfobernsteinsäure besteht.

12. Verfahren nach einem der vorhergehenden Ansprüche weiter dadurch gekennzeichnet, daß 1% bis 25% des Monomers oder der Monomere anfangs mit zusätzlichen Beigaben zugefügt werden und die Reaktion 2 bis 5 Stunden bei einer Temperatur von 50°C bis 75°C in Anwesenheit eines freien Radikalpolymerisationsinitiators fortgeführt wird.